# EUROPEAN PATENT SPECIFICATION

(11) **EP 2 081 318 B1**
(45) Date of publication and mention of the grant of the patent: **13.07.2016**
(21) Application number: 08748555.3
(22) Date of filing: 13.05.2008
(51) Int. Cl.: H04L 29/06, H04L 29/08, H04W 4/00

(54) **METHOD AND DEVICE FOR INITIATING THE SESSION CONNECTION**
VERFAHREN UND VORRICHTUNG ZUR INITIIERUNG EINER SITZUNGSVERBINDUNG
PROCÉDÉ ET DISPOSITIF POUR INITIER LA CONNEXION DE SESSION

(30) Priority: 30.05.2007 CN 200710137726
(43) Date of publication of application: 22.07.2009
(73) Proprietor: Huawei Technologies Co., Ltd., Longgang District Shenzhen, Guangdong 518129 (CN)
(72) Inventor: ZHAO, Qin, Guangdong 518129 (CN); LI, Kepeng, Guangdong 518129 (CN); CHAI, Xiaoqian, Guangdong 518129 (CN); ZHAO, Hui, Guangdong 518129 (CN)
(74) Representative: Kreuz, Georg Maria
(86) International application number: PCT/CN2008/070946
(87) International publication number: WO 2008/145047

(56) References cited:
- WO-A-02/077860
- WO-A1-2006/018707
- CN-A- 1 859 201
- CN-A- 1 929 475
- KR-A- 20060 013 020
- US-A1- 2006 174 103
- OPEN MOBILE ALLIANCE: "DS Protocol Approved Version 1.2 OMA-TS-DS_Protocol-V1_2-20060710-A" INTERNET CITATION, [Online] 10 July 2006 (2006-07-10), XP002456758 Retrieved from the Internet: URL:http://www.openmobilealliance.org/rele ase_program/docs/DS/V1_2-200607 10-A/OMA-TS-DS_Protocol-V1_2-20060710-A.pd f> [retrieved on 2007-10-26]
- "OMA DEVICE MANAGEMENT PROTOCOL; CANDIDATE VERSION 1.2" INTERNET CITATION, [Online] XP003018609 Retrieved from the Internet: URL:http://www.openmobilealliance.org/rele ase_program/docs/DM/V1_2-200604 24-C/OMA-TS-DM-Protocol-V1_2-20060424-C.pd f> [retrieved on 2006-01-01]
- "OMA Device Management Notification Initiated Session" ANNOUNCEMENT OPEN MOBILE ALLIANCE, XX, XX, [Online] 23 February 2007 (2007-02-23), pages 1-16, XP002547611 Retrieved from the Internet: URL:http://member.openmobilealliance.org/f tp/public_documents/dm/Permanent_documents /OMA-TS-DM_Notification-V1_2-20070209-A.zi p> [retrieved on 2009-09-25]
- OPEN MOBILE ALLIANCE: "OMA Device Management Security" INTERNET CITATION, [Online] 26 February 2007 (2007-02-26), XP002547612 Retrieved from the Internet: URL:http://member.openmobilealliance.org/f tp/public_documents/dm/Permanent_documents /OMA-TS-DM_Security-V1_2-20070209-A.zip> [retrieved on 2009-09-25]

## Description

### Field of the Invention

The present invention relates to the communication field, especially to device management and data synchronization technologies, and in particular, to a method and device for initiating a session.

### Background of the Invention

As the modern communication technology plays a more and more important role in people's work and life, people impose stricter requirements on the data transmission quality. Data Synchronization (DS) is a very important index. The Open Mobile Alliance (OMA) DS technology is a technology for synchronizing data between a mobile device and a network server. The synchronized data includes telephone directory, phonebook, schedule, short message, e-mail and etc. The OMA DS technology is based on the Synchronization Markup Language (SyncML). The OMA Device Management (DM) technology is also based on SyncML. The OMA DM technology is a technology for the network server to manage a terminal device in Over-The-Air (OTA) mode, for example, parameter configuration, firmware update, software download, installation, deletion, failure diagnosis and recovery, and terminal monitoring.

In the SyncML message of the prior art, a notification mechanism is provided for the server to send a Notification message to the terminal device. The terminal device initiates a session with the server according to the session ID and server ID in the Notification message. The Notification message may be sent through a short message or by Over-the-Air PUSH (OTA PUSH).

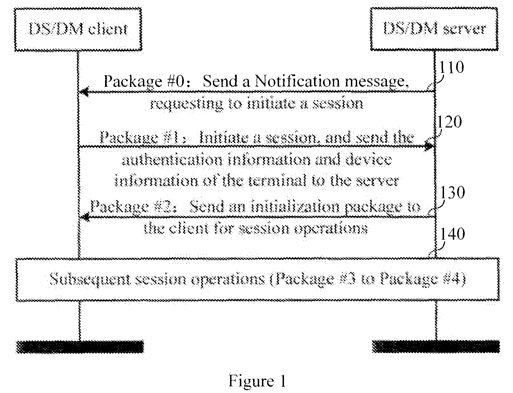

The procedure for managing the session between a DS/DM server and a DS/DM client is shown in Figure 1. In step 110, the DS/DM server sends a Notification message to the DS/DM client, requesting the client to initiate a session. In step 120, the DS/DM client initiates a session to the DS/DM server, and sends the authentication information and device information of the DS/DM client to the DS/DM server. The authentication information and device information is included in a Package #1 (Package 1) message for managing the session. In step 130, the DS/DM server sends a Package #2 message to the DS/DM client. The message carries an initialization package for session operations. Then subsequent session operations are performed through Package #3 and Package #4 messages, as shown in step 140.

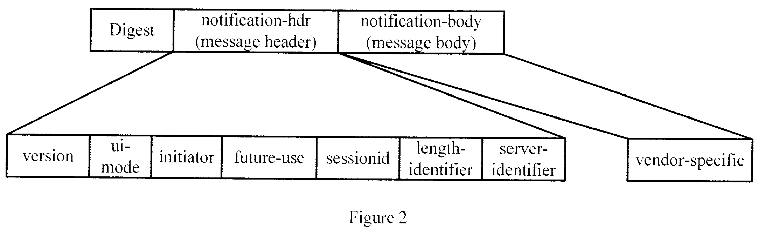

In the prior art, the Notification messages of the OMA DS and the OMA DM are in a similar format. The only difference is that the message body (notification-body) of the DS Notification message is extended. Figure 2 shows the formats of the public digest and message header (Notification-hdr) of the DS/DM Notification message. The following explains each field in the Notification message.

```
    <digest> ::= 128*BIT (Bit) ;'MD5 digest value'
    <version> ::= 10*BIT ; 'Version information'
    <ui-mode> ::= <not-specified> / <background> / ; 'User interaction mode'
                               <informative> / <user-interaction> ;
    <not-specified> ::= "00" ; 'Not specified'
    <background> ::= "01" ;'Background mode'
    <informative> ::= "10" ;'Informative mode'
    <user-interaction> ::= "11" ; 'Confirmation mode'
    <initiator> ::= <client> / <server> ; 'Session initiator'
    <client> ::= "0" ;'The session is initiated by the client'
    <server> ::= "1" ; 'The session is initiated by the server'
    <future-use> ::= 27*BIT ; 'Reserved for future use'
    <sessionid> ::= 16*BIT ;'Session ID'
    <length-identifier> ::= 8*BIT ;'Length of the server ID'
    <server-identifier> ::= <length-identifier>*CHAR ;'Server ID'
    <vendor-specific> ::= n*BIT ;'Reserved for future use'
```

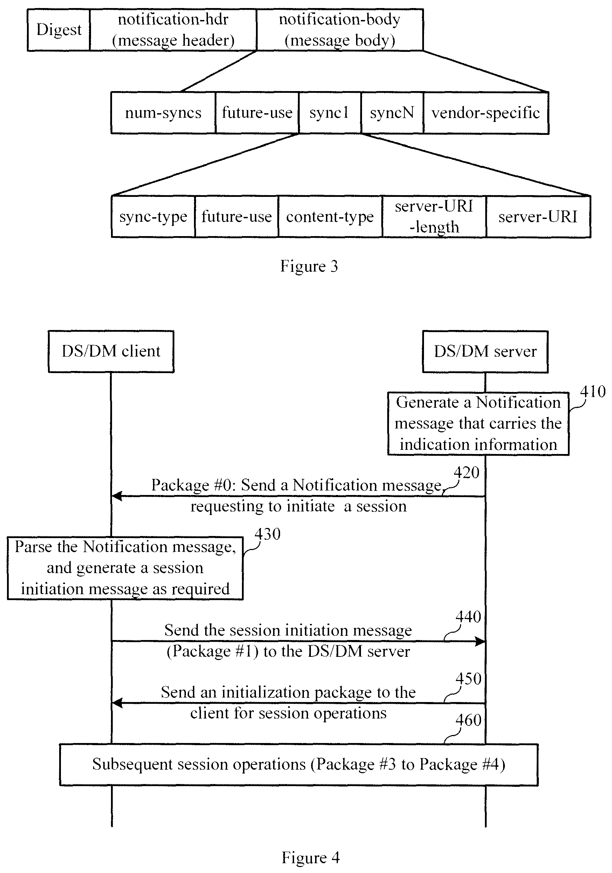

In the OMA DS, the notification-body of the Notification message is extended. The format of the extended part is shown in Figure 3. In the notification-body, the num-syncs field indicates that there are multiple synchronization operations; the future-use field indicates that the field is reserved for future use; the sync1 field to the syncN field indicate multiple synchronization operations; the sync-type field indicates the synchronization type; the content-type field indicates the type of database contents to be synchronized; the server-URI-length field indicates the length of the server-URI field that is used to store the database name of the server to be synchronized. It can be seen that the Notification message of the OMA DS indicates such information as the synchronization type and the database to be synchronized.

However, the inventor of the present invention finds that the current session management mechanism has at least a problem: wasting air interface resources. For example, the client and the server have passed the transport layer authentication, so the client does not need to report the authentication information. The air interface resources are wasted if the client reports the authentication information in this case. In a second case, after the client and the server pass the application layer authentication, the server still requires the client to report the authentication information for the application layer authentication before the setup of a management/synchronization session. If the client does not report the authentication information, the server may return a No Client Authentication Information error message to the client. Then the client needs to report the authentication information again. This requires one more interaction between the client and the server,
thus wasting the air interface resources. In a third case, the client sends complete device information to the server although the server has no such requirement. This also wastes air interface resources.

In addition, in the prior art, the type of synchronization that the client initiates after receiving the Notification message is selected according to the data change information of the client. The synchronization type, for example, slow synchronization, fast synchronization, and refresh synchronization, is outdated. In the intelligent synchronization, both synchronization parties should be able to select data information and data fingerprint information for transmission by analyzing the data change information and database information of each other. For example, if the server specifies bidirectional synchronization, the client does not initiate a unidirectional synchronization. If the client cannot select a proper synchronization mechanism, the session efficiency may be reduced.

Document WO 02/077860 A1 discloses a method of a method and device for initiating a session are disclosed. The method includes: receiving a session triggering message from a Data Synchronization or Device Management DS/DM server, where the message carries indication information indicating whether to report security authentication information and/or device information; and if authentication information and/or device information needs to be reported, sending a session initiation message carrying the required information to the DS/DM server. Hereby the messages send from a server to a terminal and a message is in the XML format. The message has an "auth" element and the auth element determined the authentication method and the credentials used in the SyncML session.

Further methods and systems of managing a session between a server and a client are revealed in US 2006/174103 A1, OPEN MOBILE ALLIANCE: "DS Protocol Approved Version 1.2 OMA-TS-DS_Protocol-V1_2-20060710-A", "OMA DEVICE MANAGEMENT PROTOCOL; CANDIDATE VERSION 1.2" and "OMA Device Management Notification Initiated Session" .

### Summary of the Invention

These objects are solved by a method having the features of claim 1, a DS/DM client having the features of claim 7 and a DS/DM server having the features of claim 9. Advantageous embodiments thereof are defined in the respective dependent claims.

In the embodiments of the present invention, the session triggering message carries the indication information indicating whether to report the security authentication information and/or device information or not. According to the indication information, the DS/DM client determines whether to carry the security authentication information and/or device information or not in the session initiation message sent to the DS/DM server. Because the DS/DM client can know the intention of the DS/DM server to initiate the session through the session triggering message, unnecessary interactions between the client and the server may be avoided when the reported security authentication information and/or device information does not meet the requirements of the server. Thus, the embodiments of the present invention can save network resources and improve the session efficiency.

### Brief Description of the Drawings

Figure 1 shows the process of managing a session between the DS/DM server and the DS/DM client in the prior art;
Figure 2 shows the formats of the public digest and message header of a DS/DM Notification message in the prior art;
Figure 3 shows the format of the message header of a DS Notification message in the prior art;
Figure 4 is a flowchart of a method for initiating a session in a first embodiment of the present invention;
Figure 5 shows the format of an extended Notification message in the first embodiment of the present invention;
Figure 6 is a flowchart of a method for initiating a session in a second embodiment of the present invention;
Figure 7 is a flowchart of a method for initiating a synchronization session in a third embodiment of the present invention;
Figure 8 shows the format of an extended Notification message in the third embodiment of the present invention;
Figure 9 shows the format of an extended Notification message in a fourth embodiment of the present invention;
Figure 10 shows a structure of a system for initiating a session in a fifth embodiment of the present invention; and
Figure 11 shows a structure of a system for initiating a synchronization session in a sixth embodiment of the present invention.

### Detailed Description of the Invention

To better explain the objective, technical solution and advantages of the present invention, the following describes embodiments of the present invention in detail with reference to the accompanying drawings.

The first embodiment of the present invention provides a method for initiating a session. The specific process is shown in Figure 4.

In step 410, the DS/DM server generates a session triggering message carrying indication information. In this embodiment, this message is a Notification message.

Specifically, the DS/DM server determines whether the DS/DM client is required to report the security authentication information and device information or not according to actual requirements, and determines the authentication mechanism for reporting the security authentication information (for example, the auth-basic or auth-MD5 mechanism), and the mode for reporting the device information. In addition, the DS/DM server carries the determination results in the Notification message through the indication information, so that the DS/DM client that receives the Notification message can know whether the DS/DM server requires reporting the security authentication information and/or device information or not, the authentication mechanism for reporting the security authentication information and/or device information, and the mode for reporting the device information. The indication information may be carried in the Notification message by extending the format of the Notification message.

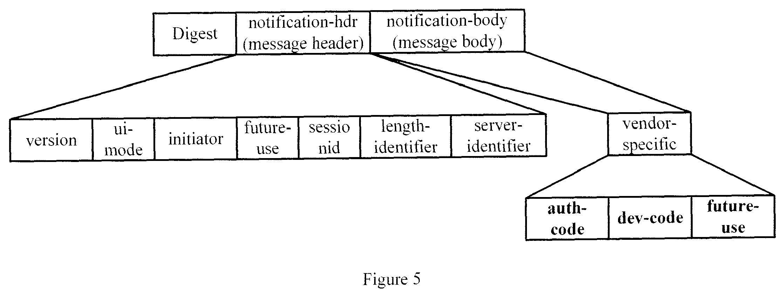

For example, as shown in Figure 5, the extended fields for carrying the indication information are added to the vendor-specific field of the notification-body of the Notification message. The extended fields may also be added to the notification-hdr; for example, the extended fields are added to the future-use field of the notification-hdr. The extended fields include auth-code, dev-code, and future-use.

The auth-code field indicates whether to report the security authentication information ,and the mechanism for reporting the security authentication information. The dev-code field indicates whether to report the device information or not, and the mode for reporting the device information. The future-use field is reserved for future use. The extended fields are explained as follows:

```
    <auth-code> ::=3*BIT ; 'DM authentication code (application layer
    authentication)'
    <dev-code> ::=3*BIT ; 'device information code'
    <future-use> ::= 18*BIT ; 'for future use'
```

Specifically, the value and meaning of the auth-code field are shown in Table 1.

**Table 1**

| Status Code | Description |
|---|---|
| 000 | The transport layer authentication is passed, and the security authentication information does not need to be reported. |
| 001 | The transport layer authentication is passed, but the security authentication information still needs to be reported, and the authentication mechanism is auth-basic. |
| 010 | The transport layer authentication is passed, but the security authentication information still needs to be reported, and the authentication mechanism is auth-MD5. |
| 011 | The transport layer authentication fails, and the security authentication information needs to be reported by using the auth-basic mechanism. |
| 100 | The transport layer authentication fails, and the security authentication information needs to be reported by using the auth-MD5 mechanism. |
| 101 | Not specified |
| 110 to 111 | Reserved for future use |

It should be noted that when the value of the auth-code field is 101, the DS/DM server does not specify the authentication mode. Thus, the DS/DM client may perform the authentication in an authentication mode specified by the AAuthPref value of DMAcc in the DS/DM standard or an authentication mode used during the previous successful session, where DMAcc is a management object set for managing server and client accounts.

The value and meaning of the dev-code field are shown in Table 2.

**Table 2**

| Status Code | Description |
|---|---|
| 000 | The DS/DM client is required to initiate a null session. |
| 001 | The DS/DM client is required to report complete device information. |
| 010 | The DS/DM client is required to report updated device information. |
| 011 | The DS/DM client is not required to report device information. |
| 100 | The DS/DM client is required to report the Uniform Resource Identifier (URI) of the device information. |
| 101 | The DS/DM client is required to report proper device information at its own discretion. |
| 110 | The DS/DM client is required to report partial device information. |
| 111 | Reserved for future use. |

In other words, when the value of the dev-code field is 000, the DS/DM server requires the DS/DM client to initiate a null session. That is, the DS/DM client does not need to report the device information in a session initiation message (Package #1). After the null session is set up, the DS/DM client may report the device information of the DS/DM client when receiving a command for obtaining the device information from the DS/DM server. After the null session is set up, if the DS/DM server wants the device information of the DS/DM client, the DS/DM server may send a Get command to obtain the device information, as shown below:

```
    <Get>
        <CmdID>1</CmdID>
        <Item>
            <Target>
              <LocURI>./DevInfo</LocURI>
           </Target>
        </Item>
    </Get>
```

When the value of the dev-code field is 001, the DS/DM server requires the DS/DM client to report complete device information. During the first time of session management, the DS/DM client needs to report complete device information to the DS/DM server. In the subsequent session management, the client may report only the updated device information so as to reduce transmission traffic.

When the value of the dev-code field is 010, the DS/DM server requires the DS/DM client to report updated device information. The DS/DM client may report updated device information to the DS/DM server by using a Put command. The DS/DM client stores the update records of the device information.

When the value of the dev-code field is 011, the DS/DM server does not require the DS/DM client to report device information. If the DS/DM server does not care about the device information of the DS/DM client or the DS/DM server thinks that the device information of the DS/DM client is useless, the DS/DM server may require the DS/DM client not to report such device information. This may reduce transmission traffic.

When the value of the dev-code field is 100, the DS/DM server requires the DS/DM client to report the URI of the device information. The DS/DM server may obtain the device information at related storage addresses according to the URI of the device information reported by the DS/DM client.

When the value of the dev-code field is 101, the DS/DM server requires the DS/DM client to report proper device information at its own discretion. The DS/DM client may report proper device information at its own discretion, for example, partially updated device information.

When the value of the dev-code field is 110, the DS/DM server requires the DS/DM client to report partial device information. At this time, the DS/DM server may further extend two fields in the vendor-specific field for specifying the URI of partial device information. For example:

```
    <URI-length> ::= 8*BIT , 'Length of the URI field of the device
    information'
    <URI>::= <URI-length >*CHAR , 'URI of the device information'
```

In step 420, the DS/DM server sends the generated Notification message carrying the indication information to the DS/DM client. Specifically, the DS/DM server may send the generated Notification message carrying the indication information to the DS/DM client through OTA PUSH, Session Initiation Protocol (SIP) PUSH, or short message, requesting the client to initiate a session.

In step 430, the DS/DM client parses the received Notification message, and generates a session initiation message as required, that is, a Package #1 message. Specifically, the DS/DM client parses the indication information carried in the Notification message, and judges how to report the security authentication information and device information in the subsequent Package #1 message. This process includes: judging whether to report the security authentication information and what mechanism is used to report the security authentication information; and judging whether to report the device information or not and how to report the device information.

Based on the preceding cases, the DS/DM client parses the extended fields in the Notification message, and judges how to report the security authentication information according to the value of the auth-code field among the extended fields. For example, if the value of this field is 000, the transport layer authentication is passed, and the security authentication information does not need to be reported. If the value of this field is 011, the transport layer authentication fails and the security authentication information needs to be reported by using the auth-basic mechanism. The process of judging how to report the device information according to the value of the dev-code field among the extended fields is similar, and is not further described.

Then, the DS/DM client generates a Package #1 message according to the parse result, where the message carries the security authentication information and/or device information required by the DS/DM server. For example, if the value of the auth-code field is 011 and the value of the dev-code field is 010, the security authentication information and updated device information are carried in the Package #1 message by using the auth-basic authentication mechanism.

In step 440, the DS/DM client sends the generated Package #1 message to the DS/DM server.

Step 450 and step 460 are the same as step 130 and step 140, and are not further described.

In this embodiment, through the Notification message, the DS/DM client can know whether the DS/DM server requires the client to report the security authentication information and/or device information or not, the mechanism for reporting the security authentication information, and the mode for reporting the device information. Thus, in this embodiment unnecessary interactions between the client and the server are avoided when the reported security authentication information and/or device information does not meet the requirements of the server, thus saving network resources.

For example, the DS/DM client and the DS/DM server have passed the transport layer authentication, so the DS/DM client does not need to report the authentication information. The DS/DM client may not report the security authentication information if the value of the auth-code field is set to 000 in the Notification message. In this way, the air interface resources may be saved.

In another example, the DS/DM server only wants to set up a null session with the DS/DM client, not requiring the DS/DM client to report the device information. The DS/DM client may not report the security authentication information if the value of the dev-code field is set to 000 in the Notification message. In this way, the air interface resources may be saved.

It should be noted that the DS/DM client is a terminal device in this embodiment. If the DS/DM client cannot receive the Notification message, the DS/DM client needs to receive the Notification message through the Notification client. The Notification client depends on the service implementation mode. For example, if the Notification message is sent in OTA PUSH mode, the Notification client is an OTA PUSH client; if the Notification message is sent through a short message, the Notification client is a short message client. Similarly, if the DS/DM server cannot send the Notification message, the DS/DM server needs to send the Notification message through the Notification server.

The second embodiment of the present invention relates to a method for initiating a session. On the basis of the first embodiment, the specific operations of the DS/DM client are added in the case that the Notification message does not indicate whether to report the security authentication information.

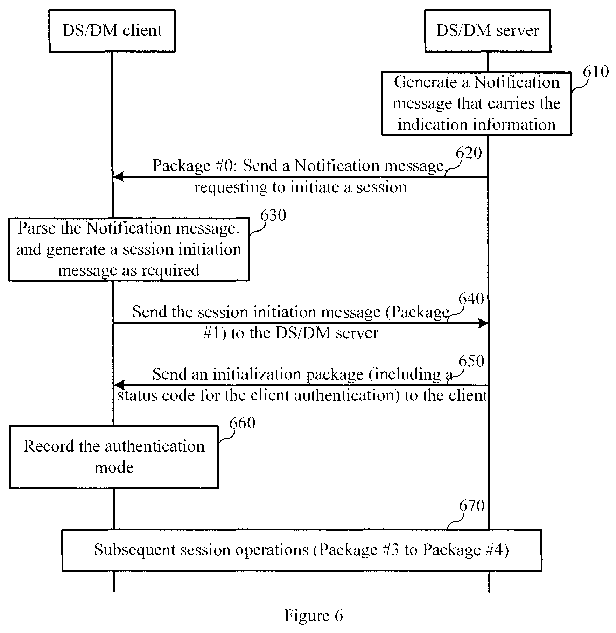

The process is shown in Figure 6. Step 610 to step 650 are the same as step 410 to step 450, and are not further described. In this embodiment, the Notification message does not indicate whether to report the security authentication information. That is, the value of the auth-code field in the Notification message is 101. Thus, the DS/DM client may check whether the AAuthPref node is available on the management object DMAcc. If this node is available and is assigned a value, the security authentication information is reported in the authentication mode indicated by the value. If this node is unavailable or this node is available but is not assigned a value, the security authentication is performed in the default authentication mode. For example, if the default authentication mode is to report the security authentication information by using the auth-basic authentication mechanism in the Package #1 message, the DS/DM client carries the security authentication information by using the auth-basic authentication mechanism in the generated Package # 1 message. In this embodiment, the authentication is passed in the default authentication mode, that is, the Package #2 message that the DS/DM server sends to the DS/DM client carries a status code indicating successful authentication.

In step 660, after knowing that the authentication is passed according to the received Package #2 message, the DS/DM client records the default authentication mode. Therefore, the default authentication mode may be used in the subsequent authentication, increasing the probability of successful authentication. Specifically, the default authentication mode may be recorded in the following two ways:
(1) recording the default authentication mode in the AAuthPref node for specifying the authentication mode. In the preceding case, the authentication mode for reporting the security authentication information by using the auth-basic authentication mechanism is recorded in the AAuthPref node as the value of the AAuthPref node.
(2) recording the default authentication mode in authentication related nodes that are extended in the management object DMAcc. In the preceding case, an authentication related node is extended in DMAcc, and the authentication mode for reporting the security authentication information by using the auth-basic authentication mechanism is recorded in the extended node.

Then, the process goes to step 670. Step 670 is the same as step 460, and is not further described.

The third embodiment of the present invention provides a method for initiating a synchronization session. In this embodiment, the DS client receives a session triggering message from the DS server, where the message carries the negotiation parameter of the data synchronization mechanism. The DS client selects a synchronization mechanism according to the negotiation parameter of the data synchronization mechanism, and initiates a synchronization session to the DS server by using the synchronization mechanism. In this embodiment, the session triggering message is a Notification message.

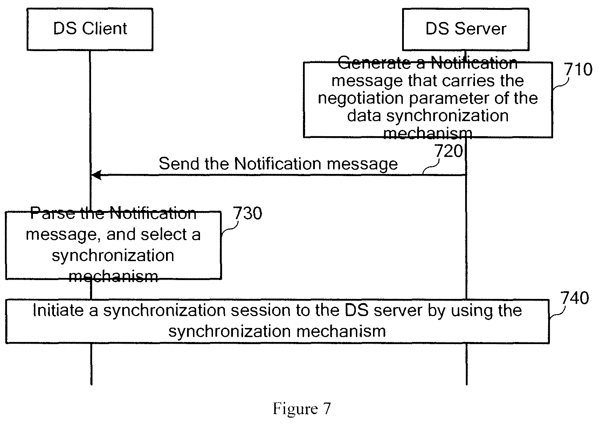

The specific process is shown in Figure 7. In step 710, the DS server generates a Notification message carrying the negotiation parameter of the data synchronization mechanism. Specifically, the negotiation parameter of the data synchronization mechanism may be carried in the Notification message by extending the format of the Notification message.

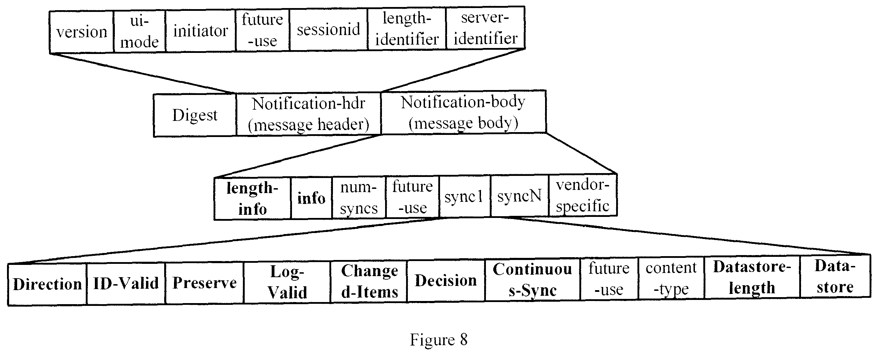

As shown in Figure 8, the fields that are extended in the Notification message include: length-info, info, Direction, ID-Valid, preserve, log-valid, Changed-Items, Decision, Continuous-sync, Datastore-length, and Data-Store. The following describes each extended field.

The length-info and info fields are described as follows:

```
    <length-info> ::= 8*BIT ; 'Length of the session information'
    <info> ::= <length-info>*CHAR(character) ; 'Session information'
```

The length-info field indicates the length of the info field. The info field indicates the session information. The DS client may display the session information to the user in displayable text format, for example, "Please Check Your New E-mail." After receiving the information, the DS client (terminal device) may initiate a synchronization session, and synchronize the new E-mail on the DS server to the DS client. That is, after receiving the Notification message, the DS client can judge whether to initiate a session according to the session information in the extended field. In addition, after determining that the session needs to be initiated, the DS client can select a synchronization mechanism, and synchronize the new E-mail on the DS server to the DS client.

The Direction field indicates the synchronization direction, and is described as follows:

```
    <Direction>::=<Not-specified>/<from-server>/<from-client>/<two-way>; 'Direction
    information'
    <Not-specified>::='00' ;'Not specified'
    <from-server>::='01' ;'From server, unidirectional'
    <from-client>::='10' ;'From client, unidirectional'
    <two-way>::='11' ;'Bidirectional'
```

The ID-Valid field indicates whether the ID of the data item of the DS server is valid, and is described as follows:

```
    <ID-Valid> ::=<valid>/<invalid> ;'ID validity'
    <valid> ::='1' ;'ID is valid'
    <invalid> ::='0' ;'ID is invalid'
```

The DS server needs to maintain the mapping between the ID information of the data items of the server and the client.

If the ID is invalid because of, for example, database corruption, the selection of a synchronization mechanism by the server and the client may be affected. For example, if the ID of the server is invalid, the server may require the client to send a fingerprint after the client initiates a session. Then the server determines the available data in the server according to the fingerprint, and instructs the client to send required data.

The preserve field indicates the data storage details, for example, clearing of data on the DS server or the DS client, and is described as follows:

```
    <preserve> ::=<not-specified>/<clear-client>/<clear-server>/<merge> ;'Whether the
    data is stored'
    <Not-specified>::='00' ;'Not specified'
    <clear-client> ::='01' ;'Clear the data on the client'
    <clear-server> ::='10' ;'Clear the data on the server'
    <merge> ::='11' ;'Merge the data of the
    server and the client'
```

The log-valid field indicates whether the change log on the DS server is valid. The change log is used to record the changes of the database and data items on the DS server. If the change log is invalid, the DS server cannot notify the DS client of changed data items on the DS server. This may affect the selection of a synchronization mechanism by the client and the server. Details are as follows:

```
    <log-valid> ::=<valid>/<invalid> ;'Validity of the change log'
    <valid> ::='1' ;'The change log is valid'
    <invalid> ::='0' ;'The change log is invalid'
```

The Changed-Items field indicates the information of changed data items on the DS server, and is described as follows:

```
    <Changed-Items> ::= 8*BIT ; 'Number of changed data items'
```

The Decision field indicates the decision direction, that is, the decision maker. The decision contents include collision detection, synchronization direction, and synchronization type. Details are as follows:

```
    <Decision> ::= <Client>/<Server> ; 'Decision maker'
    <Server> ::='1' ; 'Server is the decision maker'
    <Client> ::='0' ; 'Client is the decision maker'
```

The Continuous-sync field indicates whether the DS server wants to start a continuous synchronization session. During real-time synchronization, the DS client needs to keep a constant connection with the DS server. If the DS server uses this field to indicate that the session with the DS client is a continuous synchronization session, the DS client needs to keep a constant connection with the DS server. During the constant connection, the DS server may initiate a session with the DS client without notifying the DS client by using the Notification message. This session may be kept to ensure that the data of the DS client and the data of the DS server are synchronized on a real-time basis until either of the client and the server disconnects the session by using a session command/or the session is disconnected suddenly. Details are as follows:

```
    <Continuous-sync>::=<true>/<false> ;'Continuous synchronization'
    <true>::='1' ;'Continuous synchronization'
    <false>::='0' ;'Non-continuous synchronization'
```

Datastore-length field indicates the length of the Data-Store field. Data-Store indicates the ID of the database to be synchronized. Details are as follows:

```
    <Datastore-length> ::= 8*BIT ; 'Length of the database ID'
    <Data-Store> ::= <Datastore-length>*CHAR ; 'Database ID'
```

In step 720, the DS server sends the generated Notification message carrying the indication information to the DS client. Specifically, the DS server may send the Notification message carrying the negotiation parameter to the DS client in OTA PUSH (or SIP PUSH) mode or through a short message.

In step 730, the DS client parses the received Notification message, and selects a synchronization mechanism. Specifically, the DS client obtains the negotiation parameter of the data synchronization mechanism by parsing the Notification message, and selects a proper synchronization mechanism according to the negotiation parameter.

The selection of a synchronization mechanism includes one of the following items or any combination thereof: selecting a synchronization direction, selecting whether to send all data items, selecting whether to send changed data items only, selecting whether to send the data fingerprint information, selecting whether the server is required to compare the data items, and selecting whether the server is required to replace the stored data items by using the received data items.

The following gives several examples to describe the process of selecting a proper synchronization mechanism by the DS client according to the negotiation parameter of the data synchronization mechanism.

For example, if the ID mapping of the DS server is invalid, the DS server cannot identify the ID of a data item sent from the DS client. Thus, the DS client should select to send data fingerprint information or all the data. Alternatively, if there are a lot of changed data items on the DS server, the DS client should select bidirectional synchronization or unidirectional synchronization of the DS server, and send data fingerprint information so as to avoid collision between the changed data items of the client and the server. There may also be other cases, which are not further enumerated.

In step 740, the DS client initiates a synchronization session to the DS server by using the selected synchronization mechanism.

It can be seen that the DS client can select a synchronization mechanism according to the Notification message because the negotiation parameter of the data synchronization mechanism is carried in the Notification message. Thus, this embodiment reduces the number of session interactions for selecting a synchronization mechanism, and improves the session efficiency.

The fourth embodiment of the present invention provides another method for initiating a synchronization session. On the basis of the third embodiment, in this embodiment, the indication information indicating how to report the security authentication information and device information is carried in the Notification message, where the indication information includes: whether to report the security authentication information, the mechanism for reporting the security authentication information, whether to report the device information or not, and the mode for reporting the device information. It can be seen that the fourth embodiment is a combination of the third embodiment and the first or second embodiment. The difference between the fourth embodiment and the third embodiment is as follows: in the third embodiment, the Notification message carries the negotiation parameter of the data synchronization mechanism; in the fourth embodiment, the Notification message carries not only the negotiation parameter of the data synchronization mechanism but also the indication information indicating how to report the security authentication information and device information. The difference between the fourth embodiment and the first and second embodiments is as follows: in the first and second embodiments, the server is a DS server or a DM server, the client is a DS client or a DM client, and the Notification message carries the indication information indicating how to report the security authentication information and device information; in the fourth
embodiment, the server is a DS server, the client is a DS client, and the Notification message carries not only the indication information indicating how to report the security authentication information and device information but also the negotiation parameter of the synchronization mechanism.

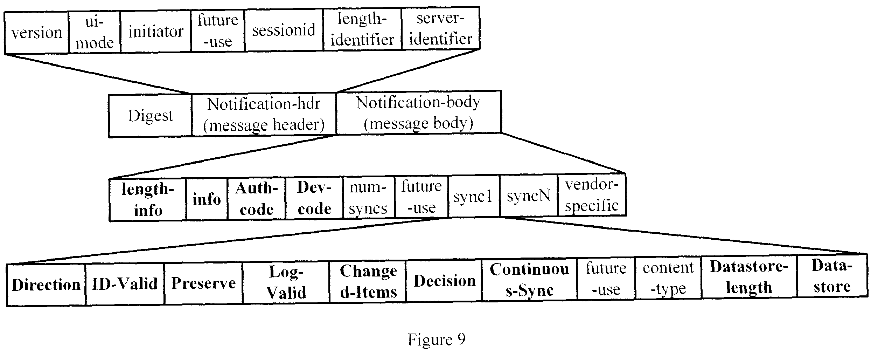

Thus, in the fourth embodiment, the fields in the Notification message need to be extended to carry the indication information indicating how to report the security authentication information and device information and the negotiation parameter of the data synchronization mechanism. As shown in Figure 9, the fields that are extended in the Notification message include length-info, info, auth-code, dev-code, Direction, ID-valid, preserve, log-valid, Changed-Items, Decision, Datastore-length, and Data-Store. Each field has been described in the first or third embodiment, and is not further described.

Thus, this embodiment may avoid unnecessary interactions between the client and the server when the reported security authentication information and/or device information does not meet the requirements of the server, thus saving network resources. Further, the DS client can select a proper synchronization mechanism according to the negotiation parameter of the data synchronization mechanism carried in the Notification message. This reduces the number of session interactions for selecting a synchronization mechanism, and improves the session efficiency.

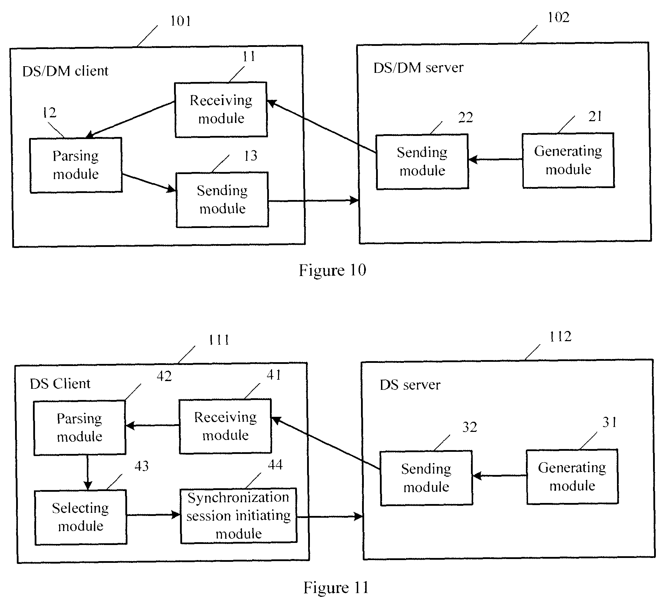

The fifth embodiment of the present invention provides a system for initiating a session. As shown in Figure 10, the system includes a DS/DM client 101 and a DS/DM server 102.

The DS/DM server 102 includes: a generating module 21, adapted to generate a session triggering message, where the message carries indication information indicating whether to report the security authentication information and/or device information or not; and a sending module 22, adapted to send the session triggering message generated by the generating module 21 to the DS/DM client 101. The indication information may also indicate the mechanism for reporting the security authentication information and/or the mode for reporting the device information. For example, it indicates whether to report the security authentication information by using the auth-basic authentication mechanism or auth-MD5 authentication mechanism, and whether to report the device information in one of the following modes: reporting complete device information, reporting updated device information, initiating a null session, and reporting the URI of the device information.

The DS/DM client 101 includes: a receiving module 11, adapted to receive a session triggering message from the DS/DM server 102, where the message carries the indication information indicating whether to report the security authentication information and/or device information or not; a parsing module 12, adapted to parse the session triggering message received by the receiving module; and a sending module 13, adapted to send a session initiation message to the DS/DM server 102 when the parsing module 12 knows that the security authentication information and/or device information needs to be reported by parsing the indication information, where the session initiation message carries the security authentication information and/or device information. In this embodiment, the session triggering message may be a Notification message.

Because the DS/DM client can know the intention of the DS/DM server to initiate the session through the session triggering message, this embodiment may avoid unnecessary interactions between the client and the server when the reported security authentication information and/or device information does not meet the requirements of the server, thus saving network resources.

It should be noted that the DS/DM client 101 in this embodiment may further include a security authenticating module and a recording module (not shown in the figure), where the security authentication module is adapted to perform security authentication in a default authentication mode when the parsed indication information does not indicate whether to report the security authentication information; and the recording module is adapted to record the default authentication mode after the security authentication is passed according to the default authentication mode. In this way, the default authentication mode may be used in subsequent authentication, increasing the probability of successful authentication.

The sixth embodiment of the present invention provides a system for initiating a synchronization session. As shown in Figure 11, the system includes a DS client 111 and a DS server 112.

The DS server 112 includes: a generating module 31, adapted to generate a session triggering message, where the message carries the negotiation parameter of the data synchronization mechanism; and a sending module 32, adapted to send the session triggering message generated by the generating module 31 to the DS client 111. The negotiation parameter of the data synchronization mechanism includes one of the following items or any combination thereof: information indicating the session content, information indicating the length of the session content, information indicating the synchronization direction, information indicating whether the data item ID of the DS server is valid, information indicating the data storage details, information indicating whether the change log on the DS server is valid, information indicating the number of changed data items on the DS server, information indicating the decision direction, information indicating whether the DS server wants to start a continuous synchronization session, information indicating the ID of the database to be synchronized, and information indicating the length of the ID of the database to be synchronized.

The DS client 111 includes: a receiving module 41, adapted to receive a session triggering message from the DS server, where the message carries the negotiation parameter of the data synchronization mechanism; a parsing module 42, adapted to parse the session triggering message received by the receiving module 41; a selecting module 43, adapted to select a synchronization mechanism according to the negotiation parameter that the parsing module 43 parses out from the session triggering message; and a synchronization session initiating module 44, adapted to initiate a synchronization session to the DS server 112 by using the synchronization mechanism selected by the selecting module 43. In this embodiment, the session triggering message may be a Notification message.

The DS client can select a proper synchronization mechanism according to the session triggering message because the negotiation parameter of the data synchronization mechanism is carried in the message. Thus, this embodiment reduces the number of session interactions for selecting a synchronization mechanism, and improves the session efficiency.

In addition, it should be noted that the session triggering message generated by the generating module 31 of the DS server 112 may further carry indication information indicating whether to report the security authentication information and/or device information or not. The DS client 111 may further include a sending module (not shown in the figure), which is adapted to send a session initiation message carrying the security authentication information and/or device information to the DS server when the parsing module 42 knows that the security authentication information and/or device information needs to be reported by parsing the session triggering message. This may avoid unnecessary interactions between the client and the server when the reported security authentication information and/or device information does not meet the requirements of the server, thus saving network resources.

In conclusion, in the embodiments of the present invention, the session triggering message carries indication information indicating whether to report the security authentication information and/or device information or not. According to the indication information, the DS/DM client determines whether to carry the security authentication information and/or device information in the session initiation message sent to the DS/DM server. Because the DS/DM client can know the intention of the DS/DM server to initiate the session through the session triggering message, the embodiments of the present invention may avoid unnecessary interactions between the client and the server when the reported security authentication information and/or device information does not meet the requirements of the server, thus saving network resources.

The indication information carried in the session triggering message may further indicate the mechanism for reporting the security authentication information and/or the mode for reporting the device information, so that the security authentication information and/or device information reported by the DS/DM client can further meet the requirements of the DS/DM server.

If the indication information does not indicate whether to report the security authentication information, the DS/DM client performs security authentication in a default authentication mode, and records the authentication mode after successful authentication. Therefore, the default authentication mode may be used in subsequent authentication, increasing the probability of successful authentication.

The DS client can select a proper synchronization mechanism according to the session triggering message because the negotiation parameter of the data synchronization mechanism is carried in the message. This reduces the number of session interactions for selecting a synchronization mechanism, and improves the session efficiency.

Although the present invention has been described through some exemplary embodiments and accompanying drawings, the invention is not limited to such embodiments.

## Claims

1. A method for initiating a Data Synchronization or Device Management, DS/DM, session, the method comprising:
receiving, by a DS/DM client, a DS/DM session triggering message from a Data Synchronization or Device Management, DS/DM server, the message carrying indication information indicating whether to report device information or not; and
if the indication information indicates that the device information needs to be reported, sending, by the DS/DM client, a DS/DM session initiation message carrying the device information to the DS/DM server;
wherein the DS/DM session triggering message is a Notification message, and the indication information is carried in extended fields of the Notification message.

2. The method of claim 1, **characterized in that**, the indication information further indicates whether to report security authentication information and a mechanism for reporting the security authentication information, the mechanism for reporting the security authentication information being auth-basic or auth-MD5.

3. The method of claim 1 or 2, **characterized in that**, the indication information further comprises a mode for reporting the device information, the mode for reporting the device information being one of the following:
reporting complete device information, reporting updated device information, reporting proper device information, reporting some specified device information, initiating a null session, and reporting a Uniform Resource Identifier, URI, link of the device information.

4. The method of claim 3, **characterized in that**, the mode for reporting the device information by initiating a null session comprises:
reporting, by the DS/DM client, the device information when receiving a command for obtaining the device information from the DS/DM server.

5. The method of any one of claims 2 to 4, **characterized in** further comprising:
the message carrying indication information indicating whether to report security authentication information and if the indication information does not indicate whether to report the security authentication information, performing security authentication in a default authentication mode, and recording the authentication mode after successful authentication.

6. The method of claim 5, **characterized in that**, the recording the authentication mode comprises:
recording, by the DS/DM client, the default authentication mode in an AAuthPref node for specifying the authentication mode; or
recording, by the DS/DM client, the default authentication mode in an authentication related node extended in DMAcc, which is a management object set for managing server and client accounts.

7. A Data Synchronization or Device Management, DS/DM, client comprising:
a receiving module, adapted to receive a DS/DM session triggering message from a DS/DM server, the message carrying indication information indicating whether to report device information or not; wherein the DS/DM session triggering message is a Notification message, and the indication information is carried in extended fields of the Notification message;
a parsing module, adapted to parse the indication information carried in the extended fields of the notification message received by the receiving module; and
a sending module, adapted to send a DS/DM session initiation message carrying the device information to the DS/DM server when the parsing module knows that the device information needs to be reported by parsing the DS/DM session triggering message.

8. The DS/DM client of claim 7, **characterized in** further comprising:
a security authenticating module, adapted to perform security authentication in a default authentication mode when the indication information further indicates whether to report security authentication information; and
a recording module, adapted to record the default authentication mode after the security authentication is performed successfully in the default authentication mode.

9. A Data Synchronization or Device Management, DS/DM, server comprising:
a generating module, adapted to generate a DS/DM session triggering message, the message carrying indication information indicating whether to report device information or not; wherein
the DS/DM session triggering message is a Notification message, and the indication information is carried in extended fields of the Notification message; and
a sending module, adapted to send the DS/DM session triggering message generated by the generating module to a DS/DM client.

## Patentansprüche

1. Verfahren zum Einleiten einer Datensynchronisations- oder Vorrichtungsmanagement-Sitzung, DS/DM-Sitzung, wobei das Verfahren Folgendes umfasst:
Empfangen durch einen DS/DM-Client einer DS/DM-Sitzungsauslösungsnachricht von einem Datensynchronisations- oder Vorrichtungsmanagement-Server, DS/DM-Server, wobei die Nachricht Angabeinformationen führt, die angeben, ob Vorrichtungsinformationen zu melden sind oder nicht; und
falls die Angabeinformationen angeben, dass die Vorrichtungsinformationen gemeldet werden müssen, Senden durch den DS/DM-Client einer DS/DM-Sitzungseinleitungsnachricht, die die Vorrichtungsinformationen führt, an den DS/DM-Server;
wobei die DS/DM-Sitzungsauslösungsnachricht eine Anzeigenachricht ist und die Angabeinformationen in erweiterten Feldern der Anzeigenachricht geführt werden.

2. Verfahren nach Anspruch 1, **dadurch gekennzeichnet, dass** die Angabeinformationen ferner angeben, ob Sicherheitsauthentifizierungsinformationen zu melden sind, und einen Mechanismus zum Melden der Sicherheitsauthentifizierungsinformationen angeben, wobei der Mechanismus zum Melden der Sicherheitsauthentifizierungsinformationen der "Auth-basic" oder der "Auth-MD5" ist.

3. Verfahren nach Anspruch 1 oder 2, **dadurch gekennzeichnet, dass** die Angabeinformationen ferner einen Modus zum Melden der Vorrichtungsinformationen umfassen, wobei der Modus zum Melden der Vorrichtungsinformationen einer der Folgenden ist:
Melden der vollständigen Vorrichtungsinformationen, Melden aktualisierter Vorrichtungsinformationen, Melden richtiger Vorrichtungsinformationen, Melden einiger spezifizierter Vorrichtungsinformationen, Einleiten einer Nullsitzung und Melden einer Verknüpfung eines einheitlichen Betriebsmittelidentifizierers, URI-Verknüpfung, der Vorrichtungsinformationen.

4. Verfahren nach Anspruch 3, **dadurch gekennzeichnet, dass** der Modus zum Melden der Vorrichtungsinformationen durch das Einleiten einer Nullsitzung Folgendes umfasst:
Melden durch den DS/DM-Client der Vorrichtungsinformationen, wenn ein Befehl zum Erhalten der Vorrichtungsinformationen von dem DS/DM-Server empfangen wird.

5. Verfahren nach einem der Ansprüche 2 bis 4, **dadurch gekennzeichnet, dass** es ferner Folgendes umfasst:
die Nachricht, die die Angabeinformationen führt, die angeben, ob Sicherheitsauthentifizierungsinformationen zu melden sind, wobei, falls die Angabeinformationen nicht angeben, ob die Sicherheitsauthentifizierungsinformationen zu melden sind, Ausführen der Sicherheitsauthentifizierung in einem vorgegebenen Authentifizierungsmodus und Aufzeichnen des Authentifizierungsmodus nach einer erfolgreichen Authentifizierung.

6. Verfahren nach Anspruch 5, **dadurch gekennzeichnet, dass** das Aufzeichnen des Authentifizierungsmodus Folgendes umfasst:
Aufzeichnen durch den DS/DM-Client des vorgegebenen Authentifizierungsmodus in einem AAuthPref-Knoten zum Spezifizieren des Authentifizierungsmodus; oder
Aufzeichnen durch den DS/DM-Client des vorgegebenen Authentifizierungsmodus in einem auf die Authentifizierung bezogenen Knoten, der im DMAcc erweitert ist, was eine Managementobjektmenge zum Managen von Server- und Client-Benutzerkonten ist.

7. Datensynchronisations- oder Vorrichtungsmanagement-Client, DS/DM-Client, der Folgendes umfasst:
ein Empfangsmodul, das dafür ausgelegt ist, eine DS/DM-Sitzungsauslösungsnachricht von einem DS/DM-Server zu empfangen, wobei die Nachricht Angabeinformationen führt, die angeben, ob Vorrichtungsinformationen zu melden sind oder nicht;
wobei die DS/DM-Sitzungsauslösungsnachricht eine Anzeigenachricht ist und die Angabeinformationen in erweiterten Feldern der Anzeigenachricht geführt werden;
ein Parsing-Modul, das dafür ausgelegt ist, die in den erweiterten Feldern der durch das Empfangsmodul empfangenen Anzeigenachricht geführten Angabeinformationen zu parsen; und
ein Sendemodul, das dafür ausgelegt ist, eine DS/DM-Sitzungseinleitungsnachricht, die die Vorrichtungsinformationen führt, an den DS/DM-Server zu senden, wenn das Parsing-Modul durch das Parsen der DS/DM-Sitzungsauslösungsnachricht weiß, dass die Vorrichtungsinformationen gemeldet werden müssen.

8. DS/DM-Client nach Anspruch 7, **dadurch gekennzeichnet, dass** er ferner Folgendes umfasst:
ein Sicherheitsauthentifizierungsmodul, das dafür ausgelegt ist, eine Sicherheitsauthentifizierung in einem vorgegebenen Authentifizierungsmodus auszuführen, wenn die Angabeinformationen ferner angeben, ob Sicherheitsauthentifizierungsinformationen zu melden sind; und
ein Aufzeichnungsmodul, das dafür ausgelegt ist, den vorgegebenen Authentifizierungsmodus aufzuzeichnen, nachdem die Sicherheitsauthentifizierung in dem vorgegebenen Authentifizierungsmodus erfolgreich ausgeführt worden ist.

9. Datensynchronisations- oder Vorrichtungsmanagement-Server, DS/DM-Server, der Folgendes umfasst:
ein Erzeugungsmodul, das dafür ausgelegt ist, eine DS/DM-Sitzungsauslösungsnachricht zu erzeugen, wobei die Nachricht Angabeinformationen führt, die angeben, ob Vorrichtungsinformationen zu melden sind oder nicht; wobei die DS/DM-Sitzungsauslösungsnachricht eine Anzeigenachricht ist und die Angabeinformationen in erweiterten Feldern der Anzeigenachricht geführt werden; und
ein Sendemodul, das dafür ausgelegt ist, die durch das Erzeugungsmodul erzeugte DS/DM-Sitzungsauslösungsnachricht an einen DS/DM-Client zu senden.

## Revendications

1. Procédé pour lancer une session de synchronisation de données ou de gestion de dispositif, DS/DM (Data Synchronization or Device Management), le procédé comprenant :
la réception, par un client DS/DM, d'un message de lancement de session DS/DM en provenance d'un serveur de synchronisation de données ou de gestion de dispositif, DS/DM, le message transportant des informations d'indication indiquant s'il est nécessaire de signaler des informations de dispositif ou non ; et
si les informations d'indication indiquent qu'il est nécessaire de signaler les informations de dispositif, l'envoi, par le client DS/DM, d'un message de lancement de session DS/DM transportant les informations de dispositif au serveur DS/DM ;
dans lequel le message de lancement de session DS/DM est un message de Notification, et les informations d'indication sont transportées dans des champs étendus du message de Notification.

2. Procédé selon la revendication 1, **caractérisé en ce que** les informations d'indication indiquent en outre s'il est nécessaire de signaler des informations d'authentification de sécurité et un mécanisme permettant de signaler les informations d'authentification de sécurité, le mécanisme permettant de signaler les informations d'authentification de sécurité étant un mécanisme auth-basic ou auth-MD5.

3. Procédé selon la revendication 1 ou 2, **caractérisé en ce que** les informations d'indication comprennent en outre un mode permettant de signaler les informations de dispositif, le mode permettant de signaler les informations de dispositif étant l'un des suivants :
le signalement d'informations de dispositif complètes, le signalement d'informations de dispositif mises à jour, le signalement d'informations de dispositif propres, le signalement de certaines informations de dispositif spécifiées, le lancement d'une session nulle, et le signalement d'un lien d'Identifiant de Ressource Uniforme, URI (Uniform Resource Identifier), des informations de dispositif.

4. Procédé selon la revendication 3, **caractérisé en ce que** le mode permettant de signaler les informations de dispositif par lancement d'une session nulle comprend : le signalement, par le client DS/DM, des informations de dispositif lors de la réception d'une commande permettant d'obtenir les informations de dispositif en provenance du serveur DS/DM.

5. Procédé selon l'une quelconque des revendications 2 à 4, **caractérisé en ce qu'**il comprend en outre :
le message transportant des informations d'indication indiquant s'il est nécessaire de signaler des informations d'authentification de sécurité et si les informations d'indication n'indiquent pas s'il est nécessaire de signaler les informations d'authentification de sécurité, l'exécution d'une authentification de sécurité dans un mode d'authentification par défaut, et l'enregistrement du mode d'authentification après réussite de l'authentification.

6. Procédé selon la revendication 5, **caractérisé en ce que** l'enregistrement du mode d'authentification comprend :
l'enregistrement, par le client DS/DM, du mode d'authentification par défaut dans un noeud AAuthPref pour spécifier le mode d'authentification ; ou
l'enregistrement, par le client DS/DM, du mode d'authentification par défaut dans un noeud lié à l'authentification étendu dans le système DMAcc, qui est un ensemble d'objets de gestion permettant de gérer des comptes de serveurs et de clients.

7. Client de synchronisation de données ou de gestion de dispositif, DS/DM, comprenant :
un module de réception, apte à recevoir un message de lancement de session DS/DM en provenance d'un serveur DS/DM, le message transportant des informations d'indication indiquant s'il est nécessaire de signaler des informations de dispositif ou non ;
dans lequel le message de lancement de session DS/DM est un message de Notification, et les informations d'indication sont transportées dans des champs étendus du message de Notification ;
un module d'analyse syntaxique, apte à analyser syntaxiquement les informations d'indication transportées dans les champs étendus du message de notification reçu par le module de réception ; et
un module d'envoi, apte à envoyer un message de lancement de session DS/DM transportant les informations de dispositif au serveur DS/DM lorsque le module d'analyse syntaxique sait qu'il est nécessaire de signaler les informations de dispositif par analyse syntaxique du message de lancement de session DS/DM.

8. Client DS/DM selon la revendication 7, **caractérisé en ce qu'**il comprend en outre :
un module d'authentification de sécurité, apte à exécuter une authentification de sécurité dans un mode d'authentification par défaut lorsque les informations d'indication indiquent en outre s'il est nécessaire de signaler des informations d'authentification de sécurité ; et
un module d'enregistrement, apte à enregistrer le mode d'authentification par défaut après que l'authentification de sécurité a réussi dans le mode d'authentification par défaut.

9. Serveur de synchronisation de données ou de gestion de dispositif, DS/DM, comprenant :
un module générateur, apte à générer un message de lancement de session DS/DM, le message transportant des informations d'indication indiquant s'il est nécessaire de signaler des informations de dispositif ou non ; dans lequel
le message de lancement de session DS/DM est un message de Notification, et les informations d'indication sont transportées dans des champs étendus du message de Notification ; et
un module d'envoi, apte à envoyer le message de lancement de session DS/DM généré par le module générateur à un client DS/DM.
